# EUROPEAN PATENT SPECIFICATION

(11) **EP 2 800 450 B1**
(45) Date of publication and mention of the grant of the patent: **19.04.2017**
(21) Application number: 13360007.2
(22) Date of filing: 02.05.2013
(51) Int. Cl.: H04W 92/20, H04W 76/02, H04W 84/04

(54) **Establishment of a direct connection between a source node and a target node**
Errichten einer Direktverbindung zwischen einem Quell- und Zielknoten
Etablissement d'une connexion directe entre un noeud d'origine et un noeud de destination

(43) Date of publication of application: 05.11.2014
(73) Proprietor: ALCATEL LUCENT, 92100 Boulogne-Billancourt (FR)
(72) Inventor: Brend, Graham R., Swindon, Wiltshire SN5 7DJ (GB); Sapiano, Philip C., Swindon, Wiltshire SN5 7DJ (GB)
(74) Representative: Berthier, Karine

(56) References cited:
- US-A1- 2010 008 293
- HUAWEI: "Discussion on the Mobility Enhancement between HeNB and eNB", 3GPP DRAFT; R3-102632_DIS_HENB2ENB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 1 October 2010 (2010-10-01), XP050453413, [retrieved on 2010-10-01]
- MITSUBISHI ELECTRIC: "HeNBs and X2 interface", 3GPP DRAFT; R3-081122 (X2 FOR HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Kansas City, USA; 20080430, 30 April 2008 (2008-04-30), XP050164322, [retrieved on 2008-04-30]

## Description

### FIELD OF THE INVENTION

The present invention relates to a method of establishing a direct connection between a source node and a target node in a telecommunications network, a telecommunications system, a source node and a target node.

### BACKGROUND OF THE INVENTION

Small Cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, often referred to as Home eNode Bs (HeNBs), typically use the customer's broadband internet connection, for example DSL, cable or the like, as backhaul towards the macrocellular network.

Adoption of HeNBs by wireless operators is widespread and with the increasing rate of adoption, the ability to integrate deployed HeNBs into the existing macrocellular network as seamlessly as possible becoming increasingly important.

One of the considerations when deploying HeNBs in a macrocellular network is whether a direct connection or interface is to be allowed between the existing macrocellular eNode Bs and the HeNBs. Supporting a direct connection between such nodes is beneficial as it allows a number of features to be supported, such as handover from one node to the other, interference co-ordination, load information sharing and support of self optimisation, which may be important as HeNBs are often user deployed. 3GPP standards defined examples of such direct connections are lur connections in UMTS telecommunications networks and X2 connections in LTE telecommunication networks.

However, one issue with allowing direct connections between macro eNode Bs and HeNB nodes is scalability. For example, supporting many direct connections from an eNode B to what could be a large number of HeNBs within its coverage area, could exhaust the available resources on the eNode B, both in terms of the actual number of direct connections the eNode B is configured to support, and the processing resource required to manage that many connections.

Known methods that utilise the latest approved version of the 3GPP defined Evolved Universal Terrestrial Radio Access Network (E-UTRAN) X2 application protocol (X2AP) specification, Release 11.5.0 (18 March 2013), allow for one node to use the X2AP protocol to prevent another node performing a handover to it. However this can only be performed after an X2 interface has been established between the nodes, and information that the node uses to determine whether to prevent a handover from another node is typically preconfigured and is not well adapted to the small cell environment, in which HeNBs are often deployed by the end user, normally in a location that cannot be pre-determined and said HeNBs can be switched off and on at random times.

It is therefore desirable to provide a mechanism that allows macro network nodes and small cells to exchange information about the setup of direct connections between themselves in a dynamic and self-organising fashion.

It is further desirable to provide a mechanism that allows macro eNode Bs and HeNBs to exchange information about the setup of X2 connections between themselves in a dynamic and self-organising fashion in an LTE telecommunications network.

Document US 2010/008293 A1 shows a dynamic setup of an X2 interface between HENB and ENB. On receipt of a request for setting up an X2 interface, it is verified whether there is a current time restriction for establishing an X2 interface or whether the maximum number of X2 connection is reached. If not, the X2-AP interface over SCTP is initialized.

### SUMMARY OF THE INVENTION

According to a first aspect of the present invention, there is provided a communication method for establishing a direct connection between a source node and a target node in a telecommunications network, the source node comprising a small cell node or a macro cell node and the target node comprising the other of the small cell node or the macro cell node, the method comprising: transmitting a configuration transfer request message from the source node to the target node to request configuration information of the target node in order to ascertain whether to establish a direct connection to the target node, determining at the target node whether a direct connection with the source node is permitted; transmitting a configuration transfer response message including configuration information of the target node and direct connection status information from the target node to the source node, the direct connection status information indicating whether a direct connection between the source node and the target node is permitted; and reserving at the target node a direct connection slot upon determining that a pending direct connection with the source node is permitted, the direct connection slot being a slot in which a direct connection with the source node can be established.
The target node may determine if a direct connection with the source node is permitted by determining how many direct connections it has already established and whether a new direct connection will exceed a threshold number of direct connection slots.
The target node may reserve the direct connection slot for the pending direct connection with the source node for a period of time, after which the direct connection slot may be released.

The configuration transfer request message may comprise an identifier identifying the type of node that the source node is.

The target node may determine if a direct connection with the source node is available based on the type of node identified in the identifier received in the configuration transfer request message.

The target node may comprise a first number of direct connection slots available for direct connections with macro cells and a second number of direct connection slots available for direct connections with small cells.

The direct connection status information transmitted from the target node to the source node may include transport level address information. The source node may transmit a direct connection set up request to the target node using the received transport level address information.

The method may further comprise powering up the source node, and scanning the surrounding network environment to detect the target node, wherein upon detection of the target node, the source node transmits the configuration transfer request message to the target node to request configuration information of the target node.

The telecommunication network may be an LTE network and the direct connection is an X2 connection. The telecommunication network may be a UMTS network and the direct connection may be an lur connection.

According to a second aspect of the invention, there is provided a telecommunications system, comprising: a source node and a target node, the source node comprising a small cell node or a macro cell node and the target node comprising the other of the small cell node or the macro cell node, wherein the source node is operable to transmit a configuration transfer request message to the target node to request configuration information of the target in order to ascertain whether to establish a direct connection to the target node, the target node is operable to determine whether a direct connection with the source node is permitted, the target node is operable to transmit a configuration transfer response message including configuration information of the target node and direct connection status information to the source node, the direct connection status information indicating whether a direct connection between the source node and the target node is permitted; and the target node is operable to reserve a direct connection slot upon determining that a pending direct connection with the source node is permitted, the direct connection slot being a slot in which a direct connection with the source node can be established.

According to a third aspect of the invention, there is provided a source node of a telecommunications network, wherein the source node is operable to transmit a configuration transfer request message to a target node to request configuration information of the target node in order to ascertain whether to establish a direct connection to the target node, and receive a configuration transfer response message including configuration information of the target node and direct connection status information, the direct connection status information indicating whether a direct connection between the source node and the target node is permitted, and wherein the source node comprises a small cell node or a macro cell node and the target node comprises the other of the small cell node or the macro cell node; wherein the target node is operable to reserve a direct connection slot upon determining that a pending direct connection with the source node is permitted, the direct connection slot being a slot in which a direct connection with the source node can be established.

According to a fourth aspect of the invention, there is provided a target node in a telecommunications network, wherein the target node is operable to receive a configuration transfer request message requesting configuration information of the target node from a source node in order to ascertain whether to establish a direct connection to the target node, determine whether a direct connection with the source node is permitted, and transmit a configuration transfer response message including configuration information of the target node and direct connection status information to the source node, the direct connection status information indicating whether a direct connection between the source node and the target node is permitted, and reserve a direct connection slot upon determining that a pending direct connection with the source node is permitted, the direct connection slot being a slot in which a direct connection with the source node can be established; and wherein the source node comprises a small cell node or a macro cell node and the target node comprises the other of the small cell node or the macro cell node.

According to a fifth aspect of the invention, there is provided a computer program product operable when executed on a computer to perform the above-described method.
Further particular and preferred aspects of the invention are set out in the accompanying independent and dependent claims.

### BRIEF DESCRIPTION OF THE DRAWINGS

Some embodiments of the apparatus and/or methods in accordance with embodiment of the present invention are now described, by way of example only, with reference to the accompanying drawings, in which:
Figure 1 shows an example of a telecommunications network comprising a small cell cluster and a macro cell;
Figure 2 shows a LTE macrocell architecture and a LTE small cell architecture;
Figure 3 shows a communication method of an embodiment; and
Figure 4 shows a communication method of another embodiment.

### DESCRIPTION OF EMBODIMENTS

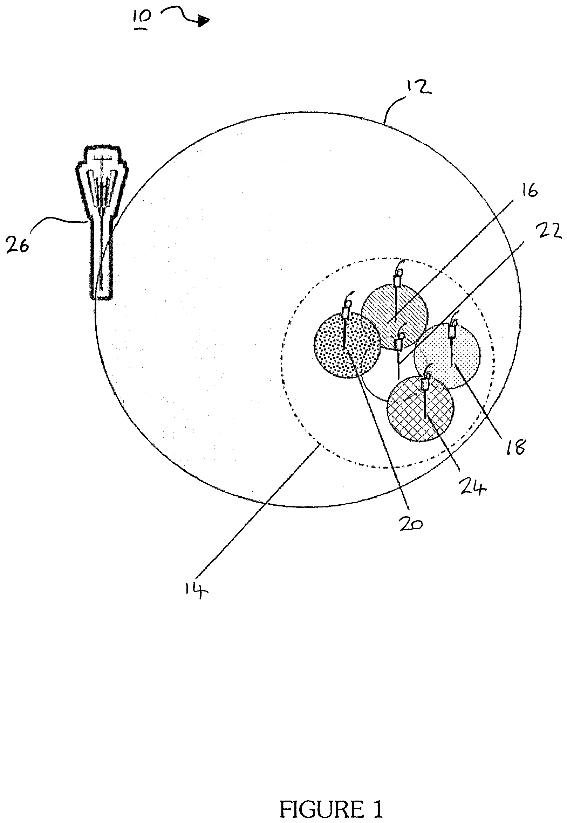

Figure 1 illustrates a heterogeneous telecommunications network 10 comprising a macro cell 12 and a cluster of small cells 14. The cluster of small cells 14 comprises a first small cell 16, a second small cell 18, a third small cell 20, a fourth small cell 22 and a fifth small cell 24. The small cells are distributed geographically to provide an area of coverage within the macro cell 12. User equipment (not shown) may roam through the network 10. When the user equipment is located within the macro cell 12, communications may be established between the user equipment and the macro cell base station 26 over an associated radio link. If the user equipment is located geographically within one of the small cells 16, 18, 20, 22 and 24, communications may be established between the user equipment and the base station of the associated small cell over an associated radio link. Of course, it will be appreciated that Figure 1 shows only an example heterogeneous network and that a plurality of macro cells may be provided, more or less than five small cells may be provided and a plurality of small cell clusters may be provided.

As described above, within the macro cell 12, there is provided a plurality of small cell base stations which provide a plurality of small cells 16, 18, 20, 22, and 24. The small cells provide local communications coverage for a user in their vicinity. As a user equipment comes within range of a small cell, such as the first small cell 16, a handover may occur between the base station 26 of the macro cell and the base station 28 of the small cell, when the base station of the small cell detects that user equipment has come within range. Likewise, as a user equipment comes within range of a different small cell, a handover may occur between the base station of the current small cell and the base station of the new small cell, when the base station of the new small cell detects that user equipment has come within range.

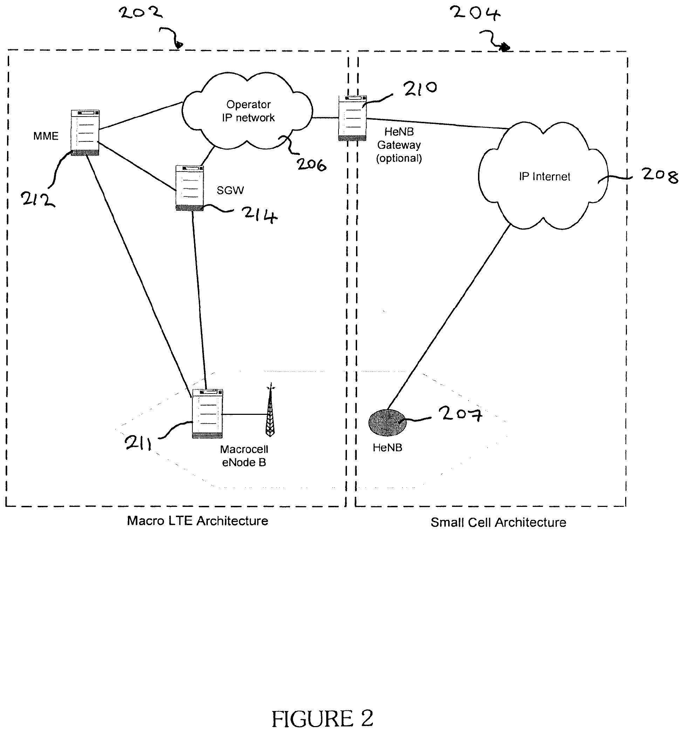

Figure 2 shows a LTE macrocell architecture 202 and a LTE small cell architecture 204 in communication through a core IP network. As can be seen, the HeNB 207 is connected to the core IP network through IP internet 208 and an optional HeNB gateway 210. The macro cell eNodeB 211 is connected to the core network 206 via mobile management entity (MME) 212 and serving gateway (SGW) 214. The eNode B 211 communicates with the MME 212 and the SGW 214 using S1 communication protocols.

Although Figure 2 shows only a single eNode B 211, it should be appreciated that a plurality of eNode Bs may be provided. Likewise, a plurality of HeNBs may be provided.

Typically if a handover for a user equipment is required between the HeNB 207 and the eNode B 211, the handover procedures will be carried out via the core IP network using S1AP communications protocols as defined in 3GPP 36.413, release 11.3.0 (18 March 2013).

In order to make handover more efficient between the HeNB 207 and the eNode B 211, it is desirable that a direct connection be established between the HeNB 207 and the eNode B 211. The X2AP protocol defined by 3GPP 36.423 release 11.4.0 (18 March 2013), provides for direct connections between two macro cell eNode Bs and between a macro cell eNode B and a HeNB, provided that the HeNB supports certain access modes.

One issue with allowing the establishment of X2 connections between macro cell eNode Bs and HeNBs is scalability. It is important to note that many HeNBs may be provided in a relatively small geographical area, and as many of the HeNBs are user deployed, the network operator will have little or no control over the X2 connection demand placed on the eNode Bs. It is therefore important that the eNode B 211 can manage its resources to ensure that its available resources are not exhausted should many HeNBs want to create an X2 connection with said eNode B.

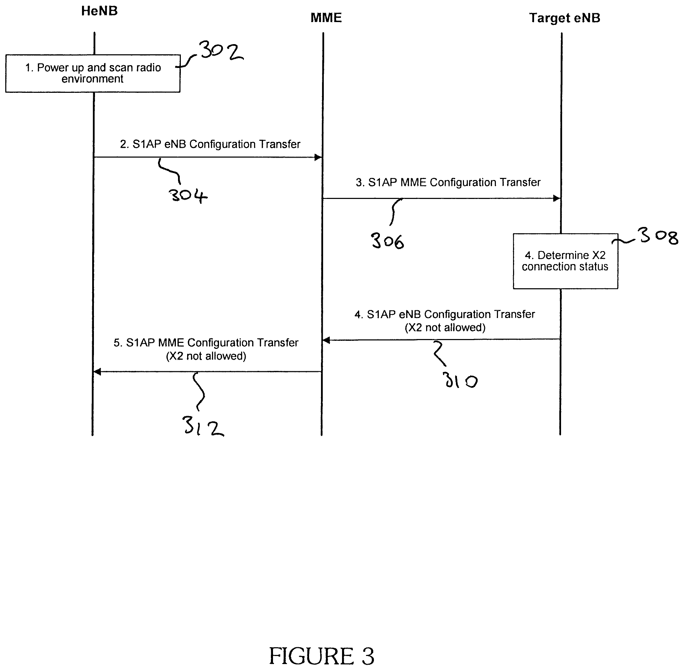

Figure 3 shows a communication method of a first embodiment in an LTE telecommunications network. Figure 3 illustrates a scenario in which a HeNB powers up and detects an eNode B (eNB). The HeNB determines that it should establish an X2 connection to the eNB and follows the following steps.

In a first step 302, the HeNB powers up and performs functions to detect the surrounding radio environment, during which it detects the eNB.

In a second step 304, the HeNB determines that it should retrieve configuration information from the eNB to ascertain whether to establish an X2 connection to said eNB and hence initiates a configuration transfer request message to the MME to request configuration information from the detected eNB. The configuration transfer request message is a S1AP eNB configuration transfer message transmitted using the S1AP communications protocol defined in 3GPP specification 36.413, release 11.3.0.

In a third step 306, the MME routes this configuration transfer request message to the relevant eNB via the S1AP MME configuration transfer message defined in 3GPP specification 36.413, release 11.3.0.

In a fourth step 308, the eNB retrieves it's configuration information including determining its current X2 connection status and determines if an X2 connection with the requesting HeNB is permitted. The eNB may decide if an X2 connection is permitted by determining how many direct connections it has already established and whether a new direct connection will exceed a threshold number of direct connection slots. In an embodiment, the eNB may have a predetermined number of X2 connection slots available for X2 connections with HeNBs and a predetermined number of X2 connection slots available for X2 connections with other macro cell eNBs. In this embodiment, if the threshold number of X2 connections with HeNBs has been reached, further HeNB X2 connections with the eNB will not be possible, even if there are X2 connection slots available for X2 connections with other macro cell eNBs.

In a fifth step 310, the eNB provides its configuration information together with X2 connection status information in a configuration transfer response message back to the MME. The X2 connection status information may be an X2 connection availability flag. The X2 connection availability flag may be added to the S1AP eNB configuration transfer response message from the eNB to the MME. The X2 connection availability flag may be added to the existing S1AP eNB configuration transfer message as defined in 3GPP specification, 36.413 release 11.3.0.

In a sixth step, the MME routes this message back to the source HeNB via the S1AP MME configuration transfer message including the X2 available flag provided by the eNB.

In the embodiment shown in Figure 3, the X2 availability flag indicates to the HeNB that the eNB cannot currently support anymore X2 connections. Therefore the HeNB does not setup an X2 connection to the eNB, but continues to use S1 procedures routed via the core network to communicate with the eNB, for example when triggering a handover of a UE from the HeNB to the eNB.

The process shown in Figures 3 provides additional information in the existing S1AP configuration transfer message in order to provide the additional functionality of allowing the target node (eNB) to effectively manage its resources and its provision of X2 connections to HeNBs.

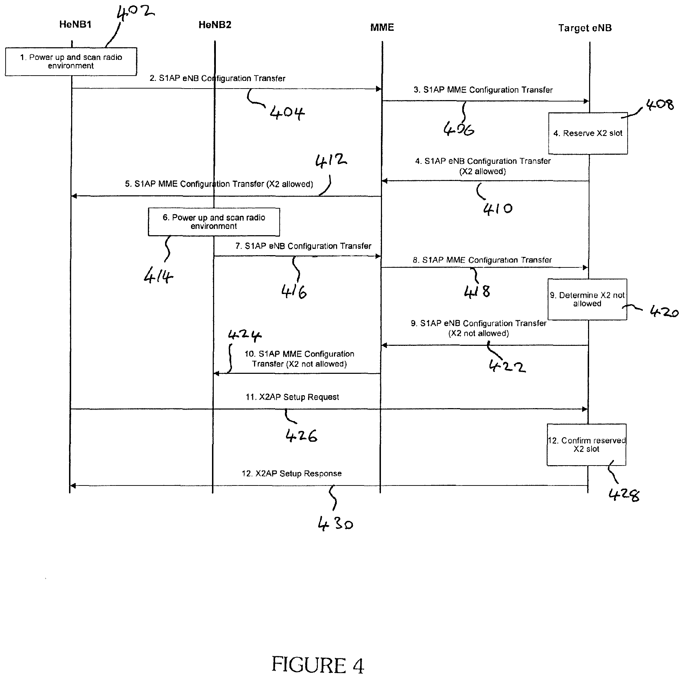

Figure 4 shows a communication method of a second embodiment. Figure 4, like Figure 3 shows a communication method in an LTE telecommunications network. In the embodiment of Figure 4, a first small cell HeNB1 and a second small cell HeNB2 both retrieve configuration information from the eNB, so as to determine whether each HeNB can establish an X2 connection with the eNB. Figure 4 differs from Figure 3 in that in this embodiment the eNB is employing an enhanced mechanism to "reserve" an X2 slot for any nodes that have requested its configuration information, so that such a mechanism is used when the eNB is able to allow additional X2 connections to be established to it.

In a first step 402, HeNB1 powers up and performs functions to detect the surrounding radio environment, during which it detects an eNB.

In a second step 404, HeNB1 determines that it should retrieve configuration information from the eNB in order to ascertain whether to establish an X2 connection to the eNB and hence initiates the S1AP eNB configuration transfer message to the MME to request configuration information from the detected eNB.

In a third step 406, the MME routes this message to the relevant eNB via the S1AP MME configuration transfer message.

In a fourth step 408, the eNB determines its current X2 connection status and decides if an X2 connection with the requesting HeNB is permitted. In this example an X2 connection is permitted and the eNB marks an X2 slot as reserved for HeNB1.

In a fifth step 410, the eNB provides its configuration information together with the X2 available flag as described above in relation to Figure 3, back to the MME in the eNB S1AP configuration transfer message. In this case the X2 available flag indicates that an X2 connection can be established.

It should be noted that in the example of Figure 4, reserving a slot for HeNB1 means that the maximum number of X2 connections that can be supported by the eNB has been reached.

In a sixth step 412, the MME routes this message back to HeNB1 via the S1AP MME configuration transfer message including the X2 available flag provided by the eNB.

In a seventh step 414, HeNB2 powers up and performs functions to detect the surrounding radio environment, during which it detects the eNB.

In an eighth step 416, HeNB2 determines that it should retrieve configuration information from the eNB in order to ascertain whether to establish an X2 connection to the eNB and hence initiates the S1AP eNB configuration transfer message to the MME to request configuration information from the detected eNB.

In a ninth step 418, the MME routes this message to the relevant eNB via the S1AP MME configuration transfer message.

In a tenth step 420, the eNB determines its current X2 connection status and decides if an X2 connection with the requesting HeNB is permitted. In this example, as the reserved X2 connection slot for HeNB1 was the last available X2 connection slot permitted for small cells by the eNB, an X2 connection is not permitted with HeNB2.

In an eleventh step 422, the eNB provides its configuration information together with the additional X2 available flag back to the MME in the eNB S1AP configuration message. In this example the X2 available flag indicates that an X2 cannot be established.

In a twelfth step 424, the MME routes this message back to the source HeNB via the S1AP MME configuration transfer message including the X2 available flag provided by the eNB.

In a thirteenth step 426, HeNB1 initiates set up of an X2 connection with the eNB by transmitting an X2AP setup request as defined in 3GPP specification 36.423, Release 11.4.0.

In a fourteenth step 428, the eNB marks the "reserved" X2 slot as "confirmed" and in a fifteenth step 430, the eNB responds to the X2AP setup request from HeNB1 with an X2AP setup response.

The embodiment shown in Figure 4 provides an advantage over the embodiment shown in Figure 3, in that by reserving an X2 connection slot for the first HeNB when it is determined that one is available, the scenario when a first HeNB requests an X2 connection to the eNB and is told that one is available, but before it can establish said X2 connection, a second HeNB uses that X2 connection slot, is avoided.

In Figure 4, the eNB may reserve the X2 connection slot for the first HeNB for a period of time, after which the direct connection slot may be released. The period of time may be a predefined period of time. By reserving the X2 connection slot for a period of time before releasing the connection slot, the situation in which an X2 connection slot is reserved but is never used, is avoided. In other words, from when the X2 connection slot is reserved for a first HeNB, the first HeNB has a period of time with which to establish an X2 connection with the eNB, before the eNB will release the slot and make it available for reservation for an X2 connection with another HeNB.

Although Figure 3 and 4 describe scenarios where a small cell HeNB as a source node requests an X2 connection with a macro cell eNB as a target node, it should be appreciated that in some embodiments, the macro cell eNB may be the source node requesting an X2 connection with a small cell HeNB as the target node, and it is the small cell HeNB in these embodiments that will determine if an X2 connection is possible.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A communication method for establishing a direct connection between a source node (207) and a target node (211) in a telecommunications network (10), the source node (207) comprising a small cell node or a macro cell node and the target node (211) comprising the other of the small cell node or the macro cell node, the method comprising:
transmitting (304; 404) a configuration transfer request message from the source node (207) to the target node (211) to request configuration information of the target node (211) in order to ascertain whether to establish a direct connection to the target node
determining (308; 420) at the target node whether a direct connection with the source node (207) is permitted;
transmitting (310; 410, 422) a configuration transfer response message including configuration information of the target node (211) and direct connection status information from the target node (211) to the source node (207), the direct connection status information indicating whether a direct connection between the source node (207) and the target node is permitted; and
reserving (408) at the target node (211) a direct connection slot upon determining that a pending direct connection with the source node (207) is permitted, the direct connection slot being a slot in which a direct connection with the source node (207) can be established.

2. A method according to claim 1, wherein the target node (211) determines if a direct connection with the source node (207) is permitted by determining how many direct connections it has already established and whether a new direct connection will exceed a threshold number of direct connection slots.

3. A method according to claim 1 or 2, wherein the target node (211) reserves the direct connection slot for the pending direct connection with the source node (207) for a period of time, after which the direct connection slot is released.

4. A method according to any preceding claim, wherein the configuration transfer request message comprises an identifier identifying the type of node that the source node (207) is.

5. A method according to claim 4, wherein the target node (211) determines if a direct connection with the source node (207) is available based on the type of node identified in the identifier received in the configuration transfer request message.

6. A method according to claim 5, wherein the target node (211) comprises a first number of direct connection slots available for direct connections with macro cells and a second number of direct connection slots available for direct connections with small cells.

7. A method according to any preceding claim, wherein the direct connection status information transmitted from the target node (211) to the source node (211) includes transport level address information.

8. A method according to claim 8, wherein the source node (207) transmits a direct connection set up request to the target node (211) using the received transport level address information.

9. A method according to any preceding claim, further comprising:
powering up (302; 402) the source node (207); and
scanning the surrounding network environment to detect the target node (211), wherein upon detection of the target node (211), the source node (207) transmits the configuration transfer request message to the target node (211) to request configuration information of the target node (211).

10. A method according to any preceding claim, wherein the telecommunication network (10) is an LTE network and the direct connection is an X2 connection, or wherein the telecommunication network (10) is a UMTS network and the direct connection is an lur connection.

11. A telecommunications system, comprising:
a source node (207) and a target node (211), the source node (207) comprising a small cell node or a macro cell node and the target node (211) comprising the other of the small cell node or the macro cell node, wherein
the source node (207) is operable to transmit (304; 404) a configuration transfer request message to the target node (211) to request configuration information of the target node (211) in order to ascertain whether to establish a direct connection to the target node,
the target node (211) is operable to determine (308; 420) whether a direct connection with the source node (207) is permitted,
the target node (211) is operable to transmit (310; 410, 422) a configuration transfer response message including configuration information of the target node (211) and direct connection status information to the source node (207), the direct connection status information indicating whether a direct connection between the source node (207) and the target node (211) is permitted; and
the target node (211) is operable to reserve (408) a direct connection slot upon determining that a pending direct connection with the source node (207) is permitted, the direct connection slot being a slot in which a direct connection with the source node (207) can be established.

12. A source node (207) of a telecommunications network (10), wherein the source node (207) is operable to
transmit (304; 404) a configuration transfer request message to a target node (211) to request configuration information of the target node (211) in order to ascertain whether to establish a direct connection to the target node, and
receive (312; 412) a configuration transfer response message including configuration information of the target node (211) and direct connection status information, the direct connection status information indicating whether a direct connection between the source node (207) and the target node (211) is permitted, and wherein
the source node (207) comprises a small cell node or a macro cell node and the target node comprises the other of the small cell node or the macro cell node;
wherein the target node (211) is operable to reserve (408) a direct connection slot upon determining that a pending direct connection with the source node (207) is permitted, the direct connection slot being a slot in which a direct connection with the source node (207) can be established.

13. A target node (211) in a telecommunications network (211), wherein the target node (2is operable to
receive (306; 406) a configuration transfer request message requesting configuration information of the target node (211) from a source node (207) in order to ascertain whether to establish a direct connection to the target node,
determine (308; 420) whether a direct connection with the source node (207) is permitted, and
transmit (310; 410, 422) a configuration transfer response message including configuration information of the target node (211) and direct connection status information to the source node (207), the direct connection status information indicating if a direct connection between the source node (207) and the target node (211) is permitted, and
reserve (408) a direct connection slot upon determining that a pending direct connection with the source node (207) is permitted, the direct connection slot being a slot in which a direct connection with the source node (207) can be established; and wherein
the source node (207) comprises a small cell node or a macro cell node and the target node comprises the other of the small cell node or the macro cell node.

14. A computer program comprising code means performing, when executed on a computer, the method steps according to claim 1.

## Patentansprüche

1. Kommunikationsverfahren zum Herstellen einer Direktverbindung zwischen einem Quellknoten (207) und einem Zielknoten (211) in einem Telekommunikationsnetz (10), wobei der Quellknoten (207) einen Kleinzellenknoten oder einen Makrozellenknoten und den Zielknoten (211) umfasst, welcher seinerseits den nicht im Quellknoten enthaltenen Kleinzellenknoten oder Makrozellenknoten umfasst, wobei das Verfahren umfasst:
das Übermitteln (304; 404) einer Konfigurationstransferanforderung von dem Quellknoten (207) an den Zielknoten (211), um Konfigurationsinformationen des Zielknotens (211) anzufordern, um zu ermitteln, ob eine Direktverbindung zu dem Zielknoten herzustellen ist;
das Bestimmen (308; 420) am Zielknoten, ob eine Direktverbindung mit dem Quellknoten (207) zugelassen ist;
das Übermitteln (310; 410, 422) einer Konfigurationstransferantwort mit Konfigurationsinformationen des Zielknotens (211) und Direktverbindungsstatus-Informationen von dem Zielknoten (211) an den Quellknoten (207), wobei die Direktverbindungsstatus-Informationen anzeigen, ob eine Direktverbindung zwischen dem Quellknoten (207) und dem Zielknoten zugelassen ist; und
das Reservieren (408) eines Direktverbindungsslots an dem Zielknoten (211) in Reaktion auf das Bestimmen, dass eine anhängige Direktverbindung mit dem Quellknoten (207) zugelassen ist, wobei der Direktverbindungsslot ein Slot ist, in welchem eine Direktverbindung mit dem Quellknoten (207) hergestellt werden kann.

2. Verfahren nach Anspruch 1, wobei der Zielknoten (211) bestimmt, ob eine Direktverbindung mit dem Quellknoten (207) zugelassen ist, indem er ermittelt, wie viele Direktverbindungen er schon hergestellt hat, und ob mit einer neuen Direktverbindung ein Grenzwert für Direktverbindungsslots überschritten würde.

3. Verfahren nach Anspruch 1 oder 2, wobei der Zielknoten (211) den Direktverbindungsslot für die anhängige Direktverbindung mit dem Quellknoten (207) für eine bestimmte Zeitspanne reserviert, nach deren Ablauf der Direktverbindungsslot freigegeben wird.

4. Verfahren nach einem jeglichen der vorgenannten Ansprüche, wobei die Konfigurationstransferanforderung eine Kennung umfasst, welche den Knotentyp identifiziert, dem der Quellknoten (207) angehört.

5. Verfahren nach Anspruch 4, wobei der Zielknoten (211) auf der Grundlage des anhand der Kennung aus der Konfigurationstransferanforderung identifizierten Knotentyps bestimmt, ob eine Direktverbindung mit dem Quellknoten (207) verfügbar ist.

6. Verfahren nach Anspruch 5, wobei der Zielknoten (211) eine erste Anzahl von für Direktverbindungen mit Makrozellen verfügbaren Direktverbindungsslots und eine zweite Anzahl von für Direktverbindungen mit Kleinzellen verfügbaren Direktverbindungsslots umfasst.

7. Verfahren nach einem jeglichen der vorgenannten Ansprüche, wobei die Direktverbindungsstatus-Informationen, die vom Zielknoten (211) an den Quellknoten (211) übermittelt werden, Transportebenenadressen-Informationen umfassen.

8. Verfahren nach Anspruch 8, wobei der Quellknoten (207) anhand der empfangenen Transportebenenadressen-Informationen eine Direktverbindungsaufbauanforderung an den Zielknoten (211) übermittelt.

9. Verfahren nach einem beliebigen der vorstehenden Ansprüche, weiterhin umfassend:
das Einschalten (302; 402) des Quellknotens (207); und
das Scannen der umliegenden Netzumgebung zum Erkennen des Zielknotens (211), wobei der Quellknoten (207) auf das Erkennen des Zielknotens (211) hin die Konfigurationstransferanforderung an den Zielknoten (211) übermittelt, um Konfigurationsinformationen des Zielknotens (211) anzufordern.

10. Verfahren nach einem jeglichen der vorgenannten Ansprüche, wobei das Telekommunikationsnetz (10) ein LTE-Netz und die Direktverbindung eine X2-Verbindung ist, oder wobei das Telekommunikationsnetz (10) ein UMTS-Netz und die Direktverbindung eine lur-Verbindung ist.

11. Telekommunikationssystem, umfassend:
einen Quellknoten (207) und einen Zielknoten (211), wobei der Quellknoten (207) einen Kleinzellenknoten oder einen Makrozellenknoten und den Zielknoten (211) umfasst, welcher seinerseits den nicht im Quellknoten enthaltenen Kleinzellenknoten oder Makrozellenknoten umfasst, wobei
der Quellknoten (207) betriebsbereit ist für das Übermitteln (304; 404) einer Konfigurationstransferanforderung an den Zielknoten (211), um Konfigurationsinformationen des Zielknotens (211) anzufordern, um zu ermitteln, ob eine Direktverbindung zu dem Zielknoten herzustellen ist;
der Zielknoten (211) betriebsbereit ist für das Bestimmen (308; 420), ob eine Direktverbindung mit dem Quellknoten (207) zugelassen ist,
der Zielknoten (211) betriebsbereit ist für das Übermitteln (310; 410, 422) einer Konfigurationstransferantwort mit Konfigurationsinformationen des Zielknotens (211) und Direktverbindungsstatus-Informationen an den Quellknoten (207), wobei die Direktverbindungsstatus-Informationen anzeigen, ob eine Direktverbindung zwischen dem Quellknoten (207) und dem Zielknoten (211) zugelassen ist; und
der Zielknoten (211) betriebsbereit ist für das Reservieren (408) eines Direktverbindungsslots an dem Zielknoten (211) in Reaktion auf das Bestimmen, dass eine anhängige Direktverbindung mit dem Quellknoten (207) zugelassen ist, wobei der Direktverbindungsslot ein Slot ist, in welchem eine Direktverbindung mit dem Quellknoten (207) hergestellt werden kann.

12. Quellknoten (207) eines Telekommunikationsnetzes (10), wobei der Quellknoten (207) betriebsbereit ist für
das Übermitteln (304; 404) einer Konfigurationstransferanforderung an einen Zielknoten (211), um Konfigurationsinformationen des Zielknotens (211) anzufordern, um zu ermitteln, ob eine Direktverbindung zu dem Zielknoten herzustellen ist; und
den Empfang (312; 412) einer Konfigurationstransferantwort mit Konfigurationsinformationen des Zielknotens (211) und Direktverbindungsstatus-Informationen, wobei die Direktverbindungsstatus-Informationen anzeigen, ob eine Direktverbindung zwischen dem Quellknoten (207) und dem Zielknoten (211) zugelassen ist, und wobei
der Quellknoten (207) einen Kleinzellenknoten oder einen Makrozellenknoten, und der Zielknoten den anderen Kleinzellenknoten oder Makrozellenknoten umfasst,
wobei der Zielknoten (211) betriebsbereit ist für das Reservieren (408) eines Direktverbindungsslots in Reaktion auf das Bestimmen, dass eine anhängige Direktverbindung mit dem Quellknoten (207) zugelassen ist, wobei der Direktverbindungsslot ein Slot ist, in welchem eine Direktverbindung mit dem Quellknoten (207) hergestellt werden kann.

13. Zielknoten (211) in einem Telekommunikationsnetz, wobei der Zielknoten (211) betriebsbereit ist für
den Empfang (306; 406) einer Konfigurationstransferanforderung von einem Quellknoten (207), welche Konfigurationsinformationen des Zielknotens (211) anfordert, um zu ermitteln, ob eine Direktverbindung zu dem Zielknoten herzustellen ist,
das Bestimmen (308; 420), ob eine Direktverbindung mit dem Quellknoten (207) zugelassen ist, und
das Übermitteln (310; 410, 422) einer Konfigurationstransferantwort mit Konfigurationsinformationen des Zielknotens (211) und Direktverbindungsstatus-Informationen an den Quellknoten (207), wobei die Direktverbindungsstatus-Informationen anzeigen, ob eine Direktverbindung zwischen dem Quellknoten (207) und dem Zielknoten (211) zugelassen ist, und
das Reservieren (408) eines Direktverbindungsslots in Reaktion auf das Bestimmen, dass eine anhängige Direktverbindung mit dem Quellknoten (207) zugelassen ist, wobei der Direktverbindungsslot ein Slot ist, in welchem eine Direktverbindung mit dem Quellknoten (207) hergestellt werden kann; und wobei
der Quellknoten (207) einen Kleinzellenknoten oder einen Makrozellenknoten, und der Zielknoten (211) den anderen Kleinzellenknoten oder Makrozellenknoten umfasst.

14. Computerprogramm, welches Programmcodemittel umfasst, die beim Ausführen auf einem Computer die Verfahrensschritte nach Schritt 1 ausführen.

## Revendications

1. Procédé de communication destiné à établir une connexion directe entre un noeud d'origine (207) et un noeud de destination (211) dans un réseau de télécommunications (10), le noeud d'origine (207) étant constitué d'un noeud de petite cellule ou d'un noeud de macrocellule et le noeud de destination (211) étant constitué de l'autre élément parmi le noeud de petite cellule et le noeud de macrocellule, le procédé comprenant les étapes suivantes :
transmettre (304 ; 404) un message de demande de transfert de configuration depuis le noeud d'origine (207) vers le noeud de destination (211) pour demander des informations de configuration du noeud de destination (211) afin de vérifier s'il faut établir une connexion directe au noeud de destination ;
déterminer (308 ; 420) au niveau du noeud de destination si une connexion directe avec le noeud d'origine (207) est autorisée ;
transmettre (310 ; 410 ; 422) un message de réponse de transfert de configuration contenant des informations de configuration du noeud de destination (211) et des informations d'état de connexion directe du noeud de destination (211) vers le noeud d'origine (207), les informations d'état de connexion directe indiquant si une connexion directe entre le noeud d'origine (207) et le noeud de destination est autorisée ; et
réserver (408) au niveau du noeud de destination (211) un créneau temporel de connexion directe après avoir déterminé qu'une connexion directe en attente avec le noeud d'origine (207) est autorisée, le créneau temporel de connexion directe étant un créneau temporel dans lequel une connexion directe avec le noeud d'origine (207) peut être établie.

2. Procédé selon la revendication 1, dans lequel le noeud de destination (211) détermine si une connexion directe avec le noeud d'origine (207) est autorisée en déterminant combien de connexions directes il a déjà établies et si une nouvelle connexion directe entraînerait le dépassement d'un nombre seuil de créneaux temporels de connexion directe.

3. Procédé selon la revendication 1 ou 2, dans lequel le noeud de destination (211) réserve le créneau temporel de connexion directe pour la connexion directe en attente avec le noeud d'origine (207) pour une certaine durée, à l'expiration de laquelle le créneau temporel de connexion directe est libéré.

4. Procédé selon l'une quelconque des revendications précédentes, dans lequel le message de demande de transfert de configuration contient un identifiant permettant d'identifier le type de noeud auquel correspond le noeud d'origine (207).

5. Procédé selon la revendication 4, dans lequel le noeud de destination (211) détermine si une connexion directe avec le noeud d'origine (207) est disponible en fonction du type de noeud identifié dans l'identifiant reçu dans le message de demande de transfert de configuration.

6. Procédé selon la revendication 5, dans lequel le noeud de destination (211) comprend un premier nombre de créneaux temporels de connexion directe disponibles pour les connexions directes avec des macrocellules et un deuxième nombre de créneaux temporels de connexion directe disponibles pour les connexions directes avec des petites cellules.

7. Procédé selon l'une quelconque des revendications précédentes, dans lequel les informations d'état de connexion directe transmises du noeud de destination (211) au noeud d'origine (211) contiennent des informations d'adresse de couche transport.

8. Procédé selon la revendication 8, dans lequel le noeud d'origine (207) transmet une demande d'établissement de connexion directe au noeud de destination (211) en utilisant les informations d'adresse de couche transport reçues.

9. Procédé selon l'une quelconque des revendications précédentes, comprenant en outre les étapes suivantes :
mettre sous tension (302 ; 402) le noeud d'origine (207) ; et
balayer l'environnement réseau pour détecter le noeud de destination (211), le noeud d'origine (207) transmettant, dès détection du noeud de destination (211), le message de demande de transfert de configuration au noeud de destination (211) afin de demander les informations de configuration du noeud de destination (211).

10. Procédé selon l'une quelconque des revendications précédentes, dans lequel le réseau de télécommunications (10) est un réseau LTE et la connexion directe est une connexion X2, ou dans lequel le réseau de télécommunications (10) est un réseau UMTS et la connexion directe est une connexion lur.

11. Système de télécommunications, comprenant :
un noeud d'origine (207) et un noeud de destination (211), le noeud d'origine (207) étant constitué d'un noeud de petite cellule ou d'un noeud de macrocellule et le noeud de destination (211) étant constitué de l'autre élément parmi le noeud de petite cellule et le noeud de macrocellule, dans lequel
le noeud d'origine (207) permet de transmettre (304 ; 404) un message de demande de transfert de configuration au noeud de destination (211) pour demander des informations de configuration du noeud de destination (211) afin de vérifier s'il faut établir une connexion directe au noeud de destination ;
le noeud de destination (211) permet de déterminer (308 ; 420) si une connexion directe avec le noeud d'origine (207) est autorisée ;
le noeud de destination (211) permet de transmettre (310 ; 410 ; 422) un message de réponse de transfert de configuration contenant des informations de configuration du noeud de destination (211) et des informations d'état de connexion directe vers le noeud d'origine (207), les informations d'état de connexion directe indiquant si une connexion directe entre le noeud d'origine (207) et le noeud de destination (211) est autorisée ; et
le noeud de destination (211) permet de réserver (408) un créneau temporel de connexion directe après avoir déterminé qu'une connexion directe en attente avec le noeud d'origine (207) est autorisée, le créneau temporel de connexion directe étant un créneau temporel dans lequel une connexion directe avec le noeud d'origine (207) peut être établie.

12. Noeud d'origine (207) d'un réseau de télécommunications (10), dans lequel le noeud d'origine (207) permet de
transmettre (304 ; 404) un message de demande de transfert de configuration à un noeud de destination (211) pour demander des informations de configuration du noeud de destination (211) afin de vérifier s'il faut établir une connexion directe au noeud de destination ; et
recevoir (312 ; 412) un message de réponse de transfert de configuration contenant des informations de configuration du noeud de destination (211) et des informations d'état de connexion directe, les informations d'état de connexion directe indiquant si une connexion directe entre le noeud d'origine (207) et le noeud de destination (211) est autorisée ; et dans lequel
le noeud d'origine (207) est constitué d'un noeud de petite cellule ou un noeud de macrocellule et le noeud de destination est constitué de l'autre élément parmi le noeud de petite cellule et le noeud de macrocellule ;
dans lequel le noeud de destination (211) permet de réserver (408) un créneau temporel de connexion directe après avoir déterminé qu'une connexion directe en attente avec le noeud d'origine (207) est autorisée, le créneau temporel de connexion directe étant un créneau temporel dans lequel une connexion directe avec le noeud d'origine (207) peut être établie.

13. Noeud de destination (211) d'un réseau de télécommunications (211), dans lequel le noeud de destination (211) permet de
recevoir (306 ; 406) un message de demande de transfert de configuration demandant des informations de configuration du noeud de destination (211) en provenance d'un noeud d'origine (207) afin de vérifier s'il faut établir une connexion directe au noeud de destination,
déterminer (308 ; 420) si une connexion directe avec le noeud d'origine (207) est autorisée, et
transmettre (310 ; 410 ; 422) un message de réponse de transfert de configuration contenant des informations de configuration du noeud de destination (211) et des informations d'état de connexion directe au noeud d'origine (207), les informations d'état de connexion directe indiquant si une connexion directe entre le noeud d'origine (207) et le noeud de destination (211) est autorisée, et
réserver (408) un créneau temporel de connexion directe après avoir déterminé qu'une connexion directe en attente avec le noeud d'origine (207) est autorisée, le créneau temporel de connexion directe étant un créneau temporel dans lequel une connexion directe avec le noeud d'origine (207) peut être établie ; et dans lequel
le noeud d'origine (207) est constitué d'un noeud de petite cellule ou d'un noeud: de macrocellule et le noeud de destination est constitué de l'autre élément parmi le noeud de petite cellule et le noeud de macrocellule.

14. Programme informatique comprenant des moyens sous forme de code réalisant, lorsqu'il est exécuté sur un ordinateur, les étapes du procédé selon la revendication 1.
